# EUROPEAN PATENT SPECIFICATION

(11) **EP 3 218 974 B1**
(45) Date of publication and mention of the grant of the patent: **04.03.2020**
(21) Application number: 15791609.9
(22) Date of filing: 09.11.2015
(51) Int. Cl.: H02G 15/00, H01R 4/36

(54) **COVER ELEMENT FOR AN ELECTRICAL CONNECTOR**
ABDECKELEMENT FÜR EINEN ELEKTRISCHEN VERBINDER
ÉLÉMENT DE COUVERTURE POUR CONNECTEUR ÉLECTRIQUE

(30) Priority: 10.11.2014 DE 102014222879
(43) Date of publication of application: 20.09.2017
(73) Proprietor: TE Connectivity Germany GmbH, 64625 Bensheim (DE)
(72) Inventor: JAROSCHEK, Jens, 83661 Lenggries (DE)
(74) Representative: Grünecker Patent- und Rechtsanwälte PartG mbB
(86) International application number: PCT/EP2015/076052
(87) International publication number: WO 2016/075075

(56) References cited:
- EP-A- 1 443 621
- WO-A1-2014/000881
- US-A- 2 068 152
- US-A- 4 764 132
- US-A- 5 821 463
- US-A1- 2009 053 940
- Atlantic Fasteners: "Set screw point styles", , 31 December 2012 (2012-12-31), XP055247650, Retrieved from the Internet: URL:http://www.atlanticfasteners.com/tech- tips/set-screw-point-styles-and-their-use/ [retrieved on 2016-02-04]

## Description

The present invention relates to an electrical connector. In particular, the present invention relates to electrical connectors which interconnect electrically conductive cables. Such cable connectors are frequently employed in the field of high-voltage power transmission to interconnect cables or to finish cable ends. For example, mechanically and electrically interconnecting at least two ends of cables is known from US 5,201,914, by introducing the cable ends into a tubular, electrically conductive sheath and fixing them in the sheath by means of a screw joint. The screws are each guided in a borehole which runs radially in the direction of the central axis of the sheath.

Furthermore, the covering of straight cable connections between isolated electrical cables using electrically isolating elastic sleeves is known. Alongside the mechanical protection and a protection from the penetration of moisture, the sleeve also serves to control the electrical field and to shield. A possibility of mounting such a sleeve in the region of the cable connector consists in expanding a silicon rubber sheath using a spiral system and by allowing the sleeve to shrink to its desired diameter by destroying the spiral. As an alternative to such a pure cold-shrinking method, it is also possible to use a warm-shrinking material instead of the spiral, as is described in WO 2014/095563 A1, for example. Finally, an elastic sheath can also be mounted by pushing it in the longitudinal direction over the cable connector. In order to make this possible, a lubricant, for example silicone grease, must be applied in order to reduce the friction sufficiently.

The latter mounting method has the advantage that on the one hand no additional spiral is required and therefore a lot of waste can be avoided, and on the other hand no heat source is required. However, in order to be able to push an elastic sleeve on over the electrical connector without any problems, it is essential that the cable connector has a sufficiently smooth outer surface. Even small projections, apertures or uneven areas can lead to an interruption of the lubricating film and disrupt the mounting process as a result.

In order to avoid the smooth surface of the cable connector being interrupted by protruding screw heads, screws with a predetermined breaking point may be used, the heads of which shear off when a defined torque is exceeded. In this manner, the surface of the cable connector no longer has any screw heads, but it does have open recesses into which the silicone grease penetrates, so that the lubricating film is interrupted.

US 2,068,152 A discloses a solderless electrical terminal. The device preferably consists of a supporting plate or base with a body or housing integral therewith and provided with a recess or socket for the end of the cable. Another passage at right angles to the cable passage is screw threaded and of somewhat larger diameter than the passage. The clamping saddle is adapted to be inserted into the recess and has arms for embracing the sides of the cable or wire. The clamp screw or nut fits into the threaded passage and is rotatable against the upper face of the saddle to force the saddle downwardly against the cable end so as to compact the wires and spread the cable end into the position.

The brochure Atlantic Fasteners: "Set screw point styles", URL: http://www.atlanticfasteners.com/tech-tips/set-screw-point-styles-and-their-use/ discloses a variety of screws with different points.

US 2009/053940 A1 discloses a screw assembly for use with an electrical connector securing a conductor includes a threaded body configured to be releasably coupled to a coupling portion of the connector. A contacting structure includes a plate spaced from the threaded body and has a flat contacting surface configured for contacting the conductor. The plate is coupled to the threaded body. The plate is rotatable relative to the threaded body when the threaded body is coupled to the coupling portion of the connector. The plate is restricted from movement away from said threaded body when the threaded body is not coupled to the coupling portion of the connector. A spacer may be positioned between the plate and the threaded body and is configured to urge the plate away from the threaded body.

US 4,764,132 A relates to a connector block assembly for electrically connecting a proximal ring electrode of a bipolar pacemaker lead to the pacemaker. The connection is made in a way that maintains secure electrical contact and that prevents the delicate proximal ring electrode from being damaged or deformed. The pacemaker includes a connector block having a channel therethrough into which the proximal ring electrode is inserted. A C-ring is sandwiched between the ring electrode and an inner wall of the connector block's receiving channel. A setscrew adjustably forces the C-ring against the ring electrode. Mechanical stop means limit the transverse movement of the C-ring, thereby preventing the ring electrode from being deformed, while still maintaining a firm grasp of the ring electrode between the C-ring and the connector block. An alternative embodiment employs a resilient spring to firmly hold the ring electrode in electrical contact with the connector block.

EP 1 443 621 A1 relates to a connection of two electrical power cables. The connection has a connector with attachment screws to connect open ends of conductors. The connector is covered by a plate having a length equal to a length of stripped conductors and a width equal to a peripheral length of the connector. The plate has traversal strips including fixing parts wound around an edge of the plate covering an insulating sheath of one of the conductors that is proximate to the connector.

US 5 821 463 A discloses an electrical connector having a main body with a conductor receiving passageway extending therethrough. The conductor receiving passageway has a conductor gripping surface with an upper level and a lower level for engaging a conductor. A pair of gripping jaws are moveable to secure a conductor within the conductor receiving passageway, there being a longer gripping jaw corresponding to the lower level and a shorter gripping jaw corresponding to the upper level. The conductor is secured within the conductor receiving passageway between the longer gripping jaw and the lower surface and also between the shorter gripping jaw and the upper surface.

WO 2014/000881 A1 discloses a shearable screw, particularly for a device for screw-connecting electrical connectors, with a thread section for screwing the shearable screw into a terminal body. The thread section has a thread with an asymmetrical thread profile at least in certain sections, particularly, the thread section has a saw thread at least in certain sections. The document further relates to a system having such a shearable screw and a thrust element, and to a device with such a shearable screw for screw-connecting electrical conductors.

The problem on which the present invention is based consists in specifying a cover element and correspondingly an improved electrical connector which provide a simplified mounting of the cable connector and improved electrical properties of the closed connection.

This problem is solved by the subject-matter of independent claim 1. Advantageous further developments of the present invention are the subject-matter of the dependent claims.

The present invention is based on the idea that by inserting a cover element the recesses arising through boreholes in a cable connector can be closed such that as smooth a surface as possible can be generated for a sleeve to be pushed on. In particular, the cover element according to the invention is substantially cylindrical and possesses a convexly arched cover surface which inserts itself into the outer contour of the cable connector. The optimum adaptation to the shape of the outer surface of the cable connector is achieved by the cover surface being formed as part of a cylinder surface. The radius of the cover surface advantageously matches the radius of the outer surface of the cable connector.

However, when manufacturing the cover element according to the invention, the configuration of the cover surface as part of a cylinder surface has the disadvantage that the cover surface is not rotationally symmetrical and is therefore more expensive to manufacture. However, experimental examinations have shown that the configuration of the cover surface as part of a sphere surface leads to satisfactory results. In this case, the radius of the sphere surface in turn substantially matches the radius of the outer surface of the cable connector. Such a cover element is advantageously rotationally symmetrical around its central axis and can be produced inexpensively as a rotating part, for example.

According to an advantageous embodiment of the present invention, the barrel surface of the cylindrical cover element is provided with an outer thread. This outer thread can either interact with an inner thread already present in the borehole of the cable connector or can be a self-tapping thread. Alternatively, it can also be envisaged that the cover element is fixed in the borehole of the cable connector by means of a press fit. The latter variant is particularly advantageous if the cover element is produced from an elastic material.

In order not just to generate a uniform outer contour of the cable connector from a mechanical perspective, but rather in order to also provide a defect-free electrically homogeneous surface, according to an advantageous embodiment the cover element according to the invention consists of an electrically conductive material. For example, the cover element can be produced from a metal such as aluminium or from an electrically conductive plastic.

In order for the cover element to be easily placed into the borehole or if necessary removed again, it has, according to an advantageous embodiment, an actuation aid which facilitates the mounting or demounting of the cover element. For example, such an actuation aid can be formed by a driving profile for engaging a corresponding tool. Examples of suitable driving profiles are an inner hexagonal socket profile, a Torx profile, or a so-called Tri-wing profile. It is clear to a person skilled in the art that a wide variety of profiles may be used. The important factor when choosing the profile is above all that the aperture which is created is so small that it does not disrupt electrically and does not disrupt the lubricating film.

To better understand the present invention, this is explained in greater detail using the embodiments depicted in the following figures. Identical parts are hereby provided with identical reference signs and identical component names. Furthermore, individual features or combinations of features from the shown and described embodiments taken separately can also depict independent inventive solutions or solutions according to the invention.

The following are shown:
- **Figure 1**: a perspective depiction of an electrical connector for connecting two cables;
- **Figure 2**: a sectional view of the connector from Figure 1;
- **Figure 3**: a detail from Figure 2;
- **Figure 4**: a perspective depiction of a cover element;
- **Figure 5**: a sectional depiction of the cover element from Figure 4;
- **Figure 6**: a schematic radial sectional depiction of a cover element in the mounted state;
- **Figure 7**: a schematic longitudinal sectional depiction of a cover element in the mounted state;
- **Figure 8**: a sectional depiction of a cover element according to a further advantageous embodiment;
- **Figure 9**: a plan view of the cover element from Figure 8;
- **Figure 10**: a side view of the cover element from Figure 8.

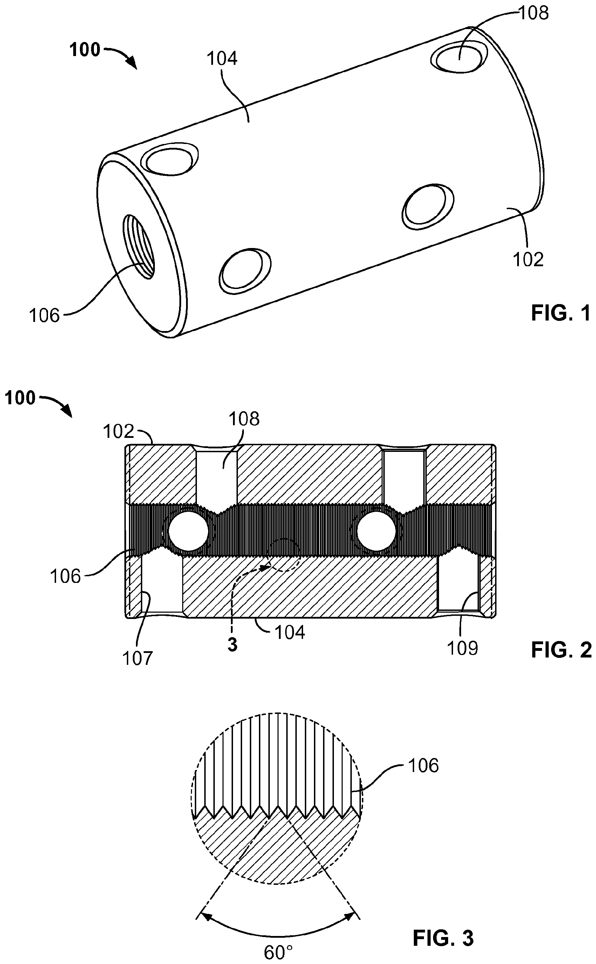

The present invention will be explained in greater detail hereafter with reference to the figures. Figure 1 shows by way of example, in a perspective view, an electrical connector 100, as can be used to connect two high-voltage cables. The electrical connector 100 comprises a substantially hollow-cylindrical connector sheath 102 with an outer surface 104 in the shape of a cylinder barrel. The connector sleeve 102 has a cable receiver 106 to receive in each case one end section of the cables to be connected. As becomes clear when Figures 2 and 3 are viewed together, the inner surface of the cable receiver 106 can be provided with a 60° zig-zag profile in order to raise the contact surface to the cable and furthermore to form a storage space for a lubricant and/or contact grease. Of course, threaded structures or other suitable roughening structures can also be installed.

As can be seen from Figure 2, the cable receiver 106 runs through the entire length of the connector sheath 102. The cables to be connected (not depicted in the figures) are each pushed in from the two opposing end regions up to the middle of the connector sheath 102 and are fixed in the connector sheath 102 by means of a plurality of screws (not depicted in the figures). In particular, breakaway screws, the screw head of which shears off when a defined torque is exceeded, are envisaged for the fixing. After the breakaway screws are mounted in the boreholes 108 provided for this, the outer region of the borehole remains open at first, so that when an elastic sleeve is mounted, the lubricant would penetrate into the recess which has thus been created and the lubricating film would break off.

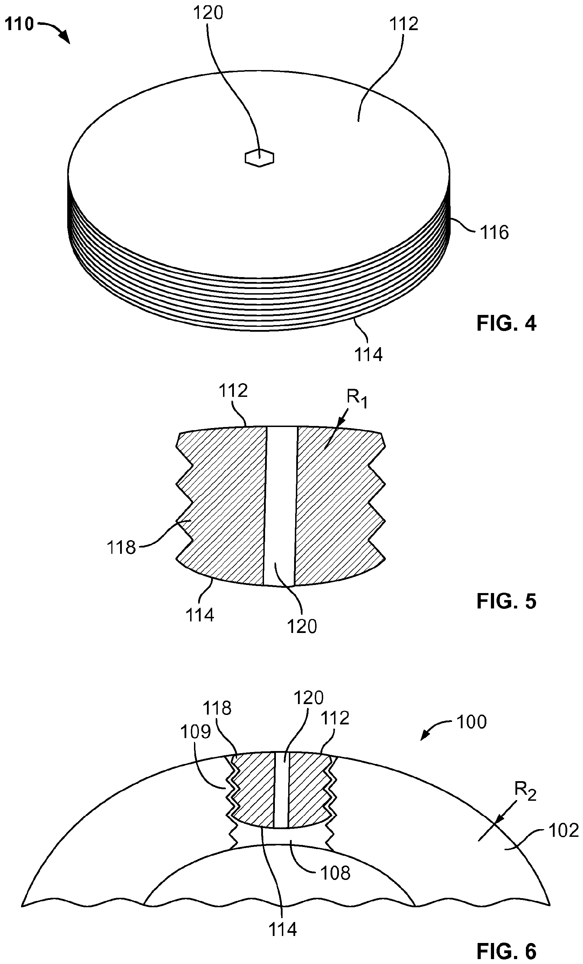

According to the invention, the remaining recess of the borehole 108 is therefore in each case sealed with a cover element 110 which is shown in perspective in Figure 4. The cover element 110 advantageously has the form of a relatively flat, cylindrical disc with a first and a second cover surface 112, 114. The barrel surface 116 of the cylindrical cover element 110 can be equipped with an outer thread which cooperates with an associated inner thread on the borehole 108. Figure 2 schematically depicts that the boreholes 108 are correspondingly either equipped with an inner thread 109 or have a smooth inner surface 107. Instead of the outer thread 118, a press fit can then be used in order to fix the cover element in the borehole 108 at the correct position.

According to the invention, the first cover surface 112 is not flat but rather is convexly arched towards the outer side of the connector surface. Figure 6 schematically shows how the finally mounted cover element 110 completes the curved surface 104 of the connector sheath 102. In this way there arises a largely smooth outer surface over which an elastic, electrically isolating cover can be easily pushed using a lubricant. In particular, there are no noteworthy recesses in which the lubricant could be lost.

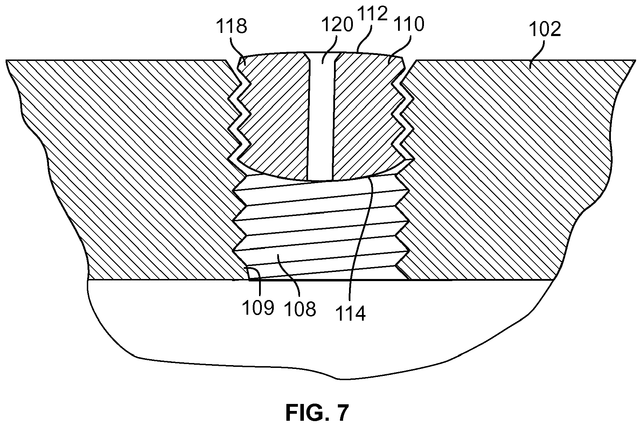

In the best case, the first cover surface 112 has the form of a part of a cylinder barrel surface, with its radius R₁ corresponding to the Radius R₂ of the connector sheath 102. In this embodiment, the first cover surface 112 is not curved in the longitudinal direction, but rather fits the line, which is straight in the longitudinal direction, of the electrical connector's cylinder barrel, as becomes clear from Figure 7.

The second cover surface 114 can be formed in any way, for example level or symmetrical to the first cover surface 112.

Furthermore, the cover element 110 may be provided with an actuation aid 120, which facilitates the mounting of the cover element 110 in the borehole 108. It is indicated in Figures 4 to 7 that such an actuation aid 120 may be formed by a driving profile such as an inner hexagonal socket profile, for example. In this case, the cover element may be actuated by an associated tool, for example a suitable key with matching outer profile.

For the cover element 110 to bring about as homogeneous an outer surface of the electrical connector 100 as possible, also from an electrical perspective, it is expediently produced from the same electrically conductive material as the connector sheath 102. This is mostly a metal, for example aluminium. Alternatively, however, electrically conductive plastics, in particular metal-filled or graphite-filled plastics, may also be used.

The shaping of the first cover surface 112 as a sector from a cylinder barrel surface leads to the manufacture of the cover element 110 being comparatively expensive because it is not rotationally symmetrical around its central axis. It has been possible to show that approximately the same positive effects of the present invention can also be achieved when the first cover surface 112 is not formed as a sector of a cylinder barrel surface, but rather is formed as a sector of a spherical surface.

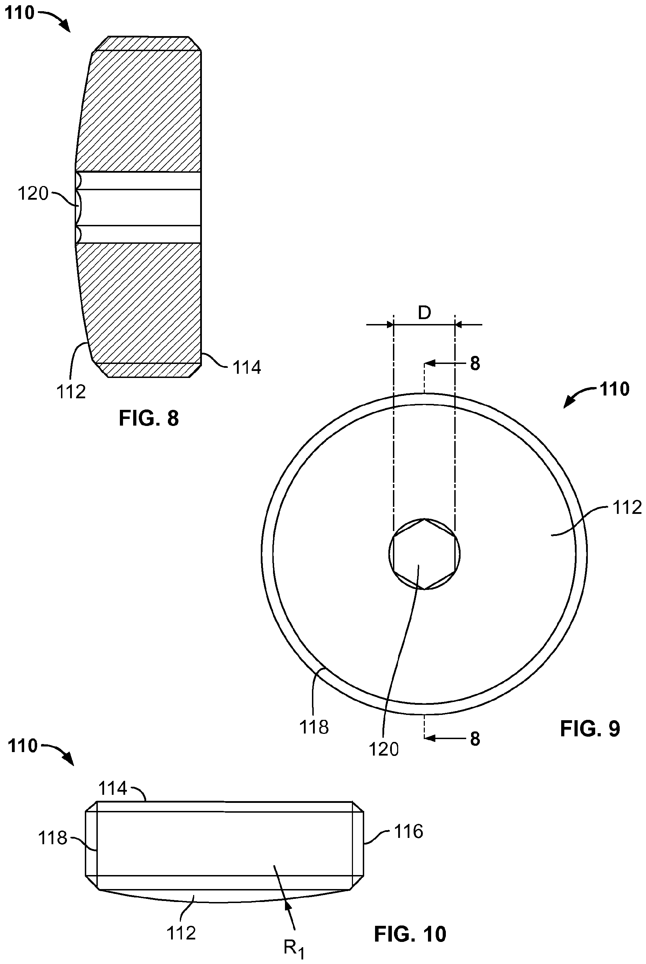

A continuous inner hexagonal socket profile is provided as an actuation aid 120 in the embodiment according to Figures 8 to 10 too. As already mentioned, the diameter D of the aperture placed into the surface of the electrical connector may not exceed a certain maximum size, so that, when an elastic, electrically isolating sleeve is pushed on, lubricant does not penetrate in sufficient quantities to rip off the lubricating film. Depending on the consistency of the lubricant used and the overall dimensions of the cable connector, the remaining aperture diameter D should not exceed approximately 20% of the original borehole diameter.

In order for no ridges and roughness to exist which could be problematic in mechanical and/or electrical respects, the cover element 110 is advantageously bevelled around.

The present invention therefore makes it possible to improve an electrical cable connector for high-voltage cables such that the boreholes into which the break-off screws are guided neither have sharp edges which could cause electrical problems, nor represent an undesired cavity for the lubricant required when the cover sleeve is being pushed on.

**REFERENCE SIGNS**

| **Reference Signs** | **Description** |
|---|---|
| 100 | electrical connector |
| 102 | connector sheath |
| 104 | outer surface of the connector sheath |
| 106 | cable receiver |
| 107 | smooth inner surface of the borehole |
| 108 | borehole for breakoff screws |
| 109 | inner thread |
| 110 | cover element |
| 112 | first cover surface |
| 114 | second cover surface |
| 116 | barrel surface of the cover element |
| 118 | outer thread of the cover element |
| 120 | actuation aid |

## Claims

1. An electrical connector for connecting or finishing at least one cable, wherein the electrical connector (100) has:
an electrically conductive connector sheath (102) and having a cable receiver (106) receiving an end section of the at least one cable, wherein the connector sheath (102) furthermore has at least one borehole (108) receiving at least one fixing element which fixes the cable in the cable receiver (106),
at least one cover element (110) separate from said fixing element, the cover element (110) comprising:
a cylindrical base body with a barrel surface (116), a first cover surface (112) which, in the mounted state of the cover element, forms a part of an outer surface of the electrical connector (100), and a second cover surface (114) which, in the mounted state, faces an inner side of the electrical connector,
**characterized in that** the electrically conductive connector sheath (102) is mounted within an elastic sleeve, the fixing element comprises a break-off screw,
the first cover surface (112) has a convex form which inserts itself into the outer contour of the cable connector (100), the first cover surface (112) has a curvature which corresponds to a cylinder barrel surface and the radius of which corresponds to an outer radius of the connector sheath (102), or the first cover surface (112) has a curvature which corresponds to a sphere surface and the radius of which corresponds to an outer radius of the connector sheath (102).

2. The electrical connector according to claim 1, wherein the barrel surface (116) of the cover element (110) bears an outer thread (118) which cooperates with an inner surface of the at least one borehole (108) to fix the cover element (110) in the borehole (108).

3. The electrical connector according to one of claims 1 to 2, wherein the cover element (110) is manufactured from an electrically conductive material.

4. The electrical connector according to Claim 3, wherein the electrically conductive material comprises aluminium or a conductive plastic.

5. The electrical connector according to one of claims 1 to 4, wherein the cover element (110) furthermore has an actuation aid (120) for mounting or demounting the cover element (110) in the borehole (108).

6. The electrical connector according to claim 5, wherein the actuation aid (120) has a driving profile for engaging a corresponding tool.

## Patentansprüche

1. Elektrischer Verbinder zum Verbinden oder Abschließen wenigstens eines Kabels, wobei der elektrische Verbinder (100) aufweist:
eine elektrisch leitende Verbinder-Ummantelung (102) mit einer Kabel-Aufnahme (106), die einen Endabschnitt des wenigstens einen Kabels aufnimmt, wobei die Verbinder-Ummantelung (102) des Weiteren wenigstens eine Bohrung (108) aufweist, die wenigstens ein Fixier-Element aufnimmt, das das Kabel in der Kabel-Aufnahme (106) fixiert,
wenigstens ein Abdeckungs-Element (110), das von dem Fixier-Element getrennt ist, wobei das Abdeckungs-Element (110) umfasst:
einen zylindrischen Grundkörper mit einer Rohr-Fläche (116), einer ersten Abdeckungs-Fläche (112), die in dem montierten Zustand des Abdeckungs-Elementes einen Teil einer Außenfläche des elektrischen Verbinders (100) bildet, und einer zweiten Abdeckungs-Fläche (114), die in dem montierten Zustand einer Innenseite des elektrischen Verbinders zugewandt ist,
**dadurch gekennzeichnet, dass** die elektrisch leitende Verbinder-Ummantelung (102) im Inneren einer elastischen Hülse angebracht ist, das Befestigungselement eine Abbrech-Schraube umfasst, die erste Abdeckungs-Fläche (112) eine konvexe Form hat, die sich in die Außenkontur des Kabel-Verbinders (100) einfügt, die erste Abdeckungs-Fläche (112) eine Krümmung hat, die einer Zylinderrohr-Fläche entspricht und deren Radius einem Außenradius der Verbinder-Ummantelung (102) entspricht, oder die erste Abdeckungs-Fläche (112) eine Krümmung hat, die einer Kugel-Fläche entspricht und deren Radius einem Außenradius der Verbinder-Ummantelung (102) entspricht.

2. Elektrischer Verbinder nach Anspruch 1, wobei die Rohr-Fläche (116) des Abdeckungs-Elementes (110) ein Außengewinde (118) aufweist, das mit einer Innenfläche der wenigstens einen Bohrung (108) zusammenwirkt, um so das Abdeckungs-Element (110) in der Bohrung (108) zu fixieren.

3. Elektrischer Verbinder nach einem der Ansprüche 1 bis 2, wobei das Abdeckungs-Element (110) aus einem elektrisch leitenden Material hergestellt ist.

4. Elektrischer Verbinder nach Anspruch 3, wobei das elektrisch leitende Material Aluminium oder einen leitenden Kunststoff umfasst.

5. Elektrischer Verbinder nach einem der Ansprüche 1 bis 4, wobei das Abdeckungs-Element (110) des Weiteren eine Betätigungs-Hilfseinrichtung (120) für Montage oder Demontage des Abdeckungs-Elementes (110) in/aus der Bohrung (108) aufweist.

6. Elektrischer Verbinder nach Anspruch 5, wobei die Betätigungs-Hilfseinrichtung (120) ein Mitnehmer-Profil für Eingriff eines entsprechenden Werkzeugs aufweist.

## Revendications

1. Connecteur électrique pour connecter ou comme terminaison d'au moins un câble, dans lequel le connecteur électrique (100) comporte :
une gaine de connecteur électriquement conductrice (102) et comportant un récepteur de câble (106) recevant une section d'extrémité de l'au moins un câble,
dans lequel la gaine de connecteur (102) comporte en outre au moins un trou percé (108) recevant au moins un élément de fixation qui fixe le câble dans le récepteur de câble (106),
au moins un élément de couverture (110) séparé dudit élément de fixation, l'élément de couverture (110) comprenant :
un corps de base cylindrique avec une surface cylindrique (116), une première surface de couverture (112) qui, à l'état monté de l'élément de couverture, forme une partie d'une surface extérieure du connecteur électrique (100), et une deuxième surface de couverture (114) qui, à l'état monté, fait face à un côté intérieur du connecteur électrique,
**caractérisé en ce que** la gaine de connecteur (102) électriquement conductrice est montée à l'intérieur d'un manchon élastique, l'élément de fixation comprend une vis de rupture, la première surface de couverture (112) présente une forme convexe qui s'insère dans le contour extérieur du connecteur de câble (100), la première surface de couverture (112) présente une courbure qui correspond à une surface cylindrique et dont le rayon correspond à un rayon extérieur de la gaine de connecteur (102), ou la première surface de couverture (112) présente une courbure qui correspond à une surface sphérique et dont le rayon correspond à un rayon extérieur de la gaine de connecteur (102).

2. Connecteur selon la revendication 1, dans lequel la surface cylindrique (116) de l'élément de couverture (110) comporte un filetage extérieur (118) qui coopère avec une surface intérieure de l'au moins un trou percé (108) pour fixer l'élément de couverture (110) dans le trou percé (108).

3. Connecteur électrique selon l'une des revendications 1 à 2, dans lequel l'élément de couverture (110) est fabriqué à partir d'un matériau électriquement conducteur.

4. Connecteur électrique selon la revendication 3, dans lequel le matériau électriquement conducteur comprend de l'aluminium ou un plastique conducteur.

5. Connecteur électrique selon l'une des revendications 1 à 4, dans lequel l'élément de couverture (110) présente en outre une aide à l'actionnement (120) pour le montage ou le démontage de l'élément de couverture (110) dans le trou percé (108).

6. Connecteur électrique selon la revendication 5, dans lequel l'aide à l'actionnement (120) présente un profil d'entraînement pour la mise en prise avec un outil correspondant.
